# EUROPÄISCHE PATENTANMELDUNG

(11) **EP 1 785 269 A1**
(43) Veröffentlichungstag der Anmeldung: **16.05.2007**
(21) Anmeldenummer: 05024756.8
(22) Anmeldetag: 12.11.2005
(51) Int. Cl.: B32B 27/08, C09J 7/02

(54) **Folienverbund mit Barriereschicht**

(71) Anmelder: Hueck Folien Ges.m.b.H, 4342 Baumgartenberg (AT)
(72) Erfinder: Aigner, Johann, 4352 Klam (AT)
(74) Vertreter: Landgraf, Elvira

(57) **Zusammenfassung**

Folienverbund, der zumindest eine Basisfolie und gegebenenfalls weitere Folienschichten oder Beschichtungen und eine Adhäsionsfolie aufweist, dadurch gekennzeichnet, dass zwischen Adhäsionsfolie und den weiteren Bestandteilen des Folienverbunds eine Barrierebeschichtung aufgebracht ist, wobei diese Barrierebeschichtung aus einem strahlungshärtbaren Lack besteht.

## Beschreibung

Die Erfindung betrifft einen Folienverbund, der eine Folie mit hohem Weichmacheranteil z. B. eine Weich-PVC-Folie, sowie eine Barriereschicht aufweist.

Weich-PVC-Folien werden als Adhäsionsfolien verwendet, beispielsweise in Schichtstoffen, die durch einfaches Andrücken auf einer glatten Oberfläche haften bleiben sollen.
Derartige Folienverbunde werden meist für Präsentationszwecke verwendet.

So ist beispielsweise aus der DE 43 20 377 eine Unterlage mit einer vorzugsweise klarsichtigen Adhäsionsfolie für darauf durch Andrücken haftende Flachteile bekannt.
Bei diesem Schichtwerkstoff handelt es sich um eine Karte, die als Flachteil durch Andrücken auf einer Unterlage haftet. Die Karte besteht aus Kunststoff und ist mit ihrer Adhäsionsfolie zum Haften auf der Unterlage abgestimmt. Die Unterlage ist eine glatte Fläche, auf der die Adhäsionsfolie ohne Haftmittel haftet, sondem lediglich durch Adhäsionskräfte, die sich zwischen der Adhäsionsfolie und der Unterlage beim Aufbringen der Karte auf diese Unterlage entwickeln. Das Anhaften der Karten an der Unterlage lässt im Laufe des mehrmaligen bzw. längeren Gebrauchs der Karte nach.

Aus der GB 2 094 496 ist ein Schichtwerkstoff bekannt, dessen Träger auf einer Seite eine Farbschicht aufweist, die ihrerseits mit einer Schutzschicht überzogen ist.

Aus der EP 833 747 B1 ist ein folienartiger Schichtwerkstoff, insbesondere für Werbe-, Moderations- und Präsentationszwecke, mit einer aus Kunststoff bestehenden flexiblen Trägerschicht, die zumindest auf einem Teilbereich ihrer Rückseite mit einer aus Kunststoff bestehenden, einen Weichmacher aufweisenden Adhäsionsfolie versehen ist, bekannt, wobei adhäsionsseitig die Adhäsionsfolie eine abziehbare weichmacherhemmende Abdeckschicht aufweist, die an ihrer der Adhäsionsfolie gegenüberliegenden Außenfläche des Schichtwerkstoffs nicht haftet.

Aufgabe der Erfindung war es, einen Folienverbund, der eine Adhäsionsfolie und eine Barrierebeschichtung aufweist, bereitzustellen, wobei die Barrierebeschichtung verhindert, dass die in der Adhäsionsfolie enthaltenen Weichmacher aus der Adhäsionsfolie migrieren.

Gegenstand der Erfindung ist daher ein Folienverbund der zumindest eine Basisfolie und gegebenenfalls weitere Folienschichten oder Beschichtungen und eine Adhäsionsfolie aufweist, dadurch gekennzeichnet, dass zwischen Adhäsionsfolie und den weiteren Bestandteilen des Folienverbunds eine Barrierebeschichtung aufgebracht ist, wobei diese Barrierebeschichtung aus einem strahlungshärtbaren Lack besteht.

Entscheidend für die langfristige Funktion einer Adhäsionsfolie mit hohem Weichmachergehalt ist, dass die Weichmacher der Folie in der Folie verbleiben. Daher ist eine Barriereschicht mit ausgezeichneter Verankerung an der Weich-PVC-Adhäsionsfolie und mit ausgezeichneter Verankerung an den daran angrenzenden Schichten essentiell. Diese Schichten können Folienschichten oder Beschichtungen, beispielsweise metallische Beschichtungen, Druckschichten, Klebeschichten und dergleichen sein. Durch die Verwendung eines im Folgenden näher definierten strahlungshärtbaren Lacksystems als Barrierebeschichtung bestehen auch keine Einschränkungen, betreffend die auf die Barriereschicht aufzubringenden Folienschichten oder Beschichtungen.

Der strahlungshärtbare Lack kann beispielsweise ein strahlungshärtbares Lacksystem auf Basis eines Polyester-, eines Epoxy- oder Polyacrylatsystems sein, das einen oder mehrere verschiedene, dem Fachmann geläufige Initiatoren enthält, die gegebenenfalls bei unterschiedlichen Wellenlängen eine Härtung des Lacksystems in unterschiedlichem Ausmaß initiieren können. So kann beispielsweise ein Photoinitiator bei einer Wellenlänge von 200 bis 400 nm aktivierbar sein, ein zweiter Initiator dann bei einer Wellenlänge von 370 bis 600 nm aktivierbar.
Zwischen den Aktivierungswellenlängen der beiden Initiatoren sollte in jedem Fall unabhängig von der Art des Initiators genügend Differenz eingehalten werden, damit nicht eine zu starke Anregung des zweiten Initiators erfolgt, während der erste Initiator aktiviert wird. Der Bereich, in dem der zweite Initiator angeregt wird, liegt günstigerweise im Transmissionswellenlängenbereich des verwendeten Trägersubstrats.
Es ist aber auch möglich nur einen Initiator, der bei definierter Wellenlänge die Härtung des Lacksystems initiiert, zu verwenden.

Ferner kann als strahlungshärtbares Lacksystem ein vorerst thermoplastisches Lacksystem, das anschließend gehärtet wird, vorgesehen sein.
Der verwendete vorerst thermoplastische Lack, der anschließend stabilisiert wird, besteht aus einer Basis MMA oder Ethylcellulose oder Cycloolefincopolymer, wobei dem Basispolymer zur Einstellung der geforderten thermoplastischen Eigenschaften bzw. zur Einstellung der anschließenden Stabilisierbarkeit, Modifikatoren zugesetzt werden.

In Abhängigkeit vom Basispolymer kommen als Modifikatoren beispielsweise Additive zur Einstellung der gewünschten Glastemperatur, des Bereichs in dem sich der Lack in thermoplastischem Zustand befindet, oder Modifikatoren zur Erreichung einer dauerhaften Aushärtung des Lacks in Frage.

Vorzugsweise werden die Komponenten in einem Lösungsmittel, beispielsweise in wässrigen Lösungsmitteln, Wasser, Alkoholen, Ethylacetat, Methylethylketon und dergleichen oder deren Mischungen gelöst.

Einem Lack auf Basis von MMA wird beispielsweise besonders vorteilhaft Nitrocellulose zur Erhöhung der Glastemperatur zugesetzt.

Einem Lack auf der Basis von Cycloolefincopolymeren werden beispielsweise zur Erhöhung der Sperreigenschaften besonders vorteilhaft Polyethylenwachse zugesetzt.
Einem Lack auf Basis von Ethylcellulose werden zur Einstellung der Härtbarkeit handelsübliche Crosslinker zugesetzt.

Die Konzentration des Basispolymeren im fertigen Lack beträgt in Abhängigkeit vom Basispolymeren, von den gewünschten Eigenschaften des Lacks und von der Art und Konzentration der Modifikatoren 4 - 50%.

Die Dicke der Barrierebeschichtung beträgt üblicherweise 1-15 µm, vorzugsweise 2-15 µm.

Auf diese Barriereschicht können dann wahlweise Beschichtungen oder Folienschichten, gegebenenfalls unter Verwendung einer Klebeschicht aufgebracht werden.

Als Folienschichten, die gegebenenfalls auch mit einer weiteren Beschichtung, beispielsweise mit einer Druckschicht und dergleichen versehen sein können, kommen beispielsweise Folien aus Polyester, Polyolefinen, wie Polyethylen oder Polypropylen oder deren Copolymeren, Polyvinylchlorid, Polymethylenmethacrylat, Polycarbonat, Fluopolymere und dergleichen, in Frage.
Ferner können als Folienschichten auch Metallfolien, beispielsweise Al-, Cu-, Sn-, Ni-, Fe- oder Edelstahlfolien oder Papier, Karton oder Verbunde mit Papier, beispielsweise Verbunde mit Kunststoffen, Gewebe oder Vliese, wie Endlosfasergewebe oder -vliese, Stapelfasergewebe oder -vliese und dergleichen, die gegebenenfalls vernadelt oder kalandriert sein können, verwendet werden.

Als Beschichtungen kommen beispielsweise gedruckte Schichten, die optische, elektrisch leitfähige oder magnetische Merkmale aufweisen können, in Frage.

Ferner kommen als Beschichtungen hydrophobe Schichten, Reflexionsschichten, wärmeabsorbierende Schichten, Schichten, die eine geringe Energietransmission aufweisen, und dergleichen in Frage.

Diese Schichten können aber auch auf einer mit der Barriereschicht, gegebenenfalls über eine Klebeschicht verbundenen Folienschicht vorhanden sein.

Der erfindungsgemäße Folienverbund kann je nach Art der Beschichtung für Präsentations- und Werbezwecke, als Sonnenschutz, Kratzschutz für empfindliche Oberflächen, Splitterschutz- und Sicherheitsfolie für Glas, und dergleichen verwendet werden.

## Patentansprüche

1. Folienverbund, der zumindest eine Basisfolie und gegebenenfalls weitere Folienschichten oder Beschichtungen und eine Adhäsionsfolie aufweist, **dadurch gekennzeichnet, dass** zwischen Adhäsionsfolie und den weiteren Bestandteilen des Folienverbunds eine Barrierebeschichtung aufgebracht ist, wobei diese Barrierebeschichtung aus einem strahlungshärtbaren Lack besteht.

2. Folienverbund nach Anspruch 1, **dadurch gekennzeichnet, dass** die Barrierebeschichtung aus einem strahlungshärtbaren Lacksystem auf Basis eines Polyester-, eines Epoxy- oder Polyacrylatsystems, das einen oder mehrere Initiatoren aufweist, besteht.

3. Folienverbund nach Anspruch 1, **dadurch gekennzeichnet, dass** die Barrierebeschichtung aus einem thermoplastischen Lack auf Basis MMA oder Ethylcellulose oder Cycloolefincopolymer, der anschließend stabilisiert wird, besteht.

4. Folienverbund nach einem der Ansprüche 1 bis 3, **dadurch gekennzeichnet, dass** die Barrierebeschichtung eine Dicke von 1-15 µm vorzugsweise 2-5 µm aufweist.

5. Folienverbund nach einem der Ansprüche 1 bis 4, **dadurch gekennzeichnet, dass** der Folienverbund weitere Schichten oder Beschichtungen aufweist.

6. Verwendung des Folienverbunds nach einem der Ansprüche 1 bis 5 für Präsentations- und Werbezwecke, als Sonnenschutz, Kratzschutz für empfindliche Oberflächen, Splitterschutz- und Sicherheitsfolie für Glas, und dergleichen.
